# EUROPEAN PATENT APPLICATION

(11) **EP 2 741 158 A2**
(43) Date of publication of application: **11.06.2014**
(21) Application number: 13196311.8
(22) Date of filing: 09.12.2013
(51) Int. Cl.: G05B 19/418

(54) **Schedule management system and program**

(30) Priority: 10.12.2012 JP 2012269624
(71) Applicant: Eneres Co., Ltd., Tokyo 120-0034 (JP)
(72) Inventor: Ikeda, Motohide, Tokyo, 120-0034 (JP)
(74) Representative: Wirnsberger, Gernot

(57) **Abstract**

A schedule management system having a first agent that includes an acquiring means that acquires information relating to a second schedule from a second agent; a determining means that determines change content of a first schedule based on the information relating to the second schedule; an asking means that, when the change content is outside a predetermined scope of rights for the first agent, asks a user whether it is acceptable to change the first schedule based on the change content; and a changing means that, when the change content is within the predetermined scope of rights for the first agent, changes the first schedule based on the change content and, when the change content is outside the predetermined scope of rights for the first agent, changes the first schedule based on the change content or change content designated by the user, based on a result of asking the user.

## Description

### BACKGROUND

### 1. TECHNICAL FIELD

The present invention relates to a schedule management system and a program.

### 2. RELATED ART

Patent Document 1 describes a schedule adjustment apparatus that considers movement distance between events, such as meetings, and determines a schedule that optimizes movement efficiency. Patent Document 2 describes a meeting condition adjustment system that automatically determines candidate dates on which a meeting can be held.
Patent Document 1: Japanese Patent Application Publication No. 2008-090409
Patent Document 2: Japanese Patent Application Publication No. 2012-174194

With the methods for schedule adjustment described in Patent Documents 1 and 2, the schedule adjustment is sometimes inconvenient for the user. Therefore, improvement to the convenience of the schedule adjustment is desired.

### SUMMARY

According to a first aspect of the present invention, provided is a schedule management system, comprising a first agent that manages a first schedule of a first target; and a second agent that manages a second schedule of a second target. The first agent includes an acquiring means that acquires information relating to the second schedule from the second agent; a determining means that determines change content of the first schedule based on the information relating to the second schedule; an asking means that, when the change content is outside a predetermined scope of rights for the first agent, asks a user whether it is acceptable to change the first schedule based on the change content; and a changing means that, when the change content is within the predetermined scope of rights for the first agent, changes the first schedule based on the change content and that, when the change content is outside the predetermined scope of rights for the first agent, changes the first schedule based on the change content or change content designated by the user, based on a result of asking the user.

In the schedule management system, the second agent may include an acquiring means that acquires information relating to the first schedule from the first agent; a determining means that determines change content of the second schedule based on the information relating to the first schedule; an asking means that, when the change content is outside a predetermined scope of rights for the second agent, asks a user whether it is acceptable to change the second schedule based on the change content; and a changing means that, when the change content is within the predetermined scope of rights for the second agent, changes the second schedule based on the change content and that, when the change content is outside the predetermined scope of rights for the second agent, changes the second schedule based on the change content or change content designated by the user, based on a result of asking the user.

In the schedule management system, the first schedule may include a schedule for scheduled operations of a first electric device, which is the first target, the second schedule may include a schedule for scheduled activities of the user, who is the second target, and the determining means of the first agent may determine the change content of the schedule for the scheduled operations of the first electric device based on information relating to the schedule for scheduled activities of the user.

In the schedule management system, when the change content of the scheduled operations of the first electric device is outside the predetermined scope of rights for the first agent, the asking means of the first agent may ask the user whether it is acceptable to change the first schedule based on the change content, at a time that is a predetermined amount of time before a time at which the scheduled operation based on the change content is to be performed.

In the schedule management system, the first schedule may include a timing at which a power supply of the first electric device is turned ON or OFF, and the determining means of the first agent may determine the change content of the schedule indicating the timing at which the power supply of the first electric device is turned ON or OFF, based on information relating to the schedule for scheduled activities of the user.

In the schedule management system, the first schedule may include a schedule for scheduled operations of a first electric device, which is the first target, the second schedule may include a schedule for scheduled operations of a second electric device, which is the second target, and the determining means of the first agent may determine the change content of the schedule for the scheduled operations of the first electric device based on information relating to the schedule for scheduled operations of the second electric device.

In the schedule management system, the first schedule may include a schedule for scheduled charging of an automobile, which is the first electric device, the second schedule may include a timing at which a power supply of the second electric device is turned ON or OFF, and the determining means of the first agent may determine the change content of the schedule for the scheduled charging of the automobile based on the timing at which a power supply of the second electric device is turned ON or OFF.

The schedule management system may further comprise an image acquiring section that acquires a captured image including the first electric device; an image generating section that generates an image showing the first agent; and a display control section that displays the image of the first electric device acquired by the image acquiring section in combination with the image showing the first agent.

The schedule management system may further comprise an image generating section that generates an image showing the first agent; and a display control section that displays the image showing the first agent in a transparent display section provided in eyewear.

In the schedule management system, the first schedule may include a schedule for scheduled activities of a first user, who is the first target, and the second schedule may include a schedule for scheduled activities of a second user, who is the second target. The second agent may include an acquiring means for acquiring date and time information relating to a desired date and time at which a shared scheduled activity that is shared by the first user and the second user is to be added to the first schedule and the second schedule; and a providing means that provides the first agent with request information that requests addition of the shared scheduled activity to the first schedule at the desired date and time. The acquiring means of the first agent may acquire the request information as the information relating to the second schedule, and the determining means of the first agent may determine that the shared scheduled activity is to be added to the first schedule at the desired date and time, as the change content of the first schedule, based on the request information. When the addition of the shared scheduled activity to the first schedule at the desired date and time is outside the scope of rights for the first agent, the asking means of the first agent may ask the first user whether it is acceptable to add the shared scheduled activity to the first schedule at the desired date and time. When the addition of the shared scheduled activity to the first schedule at the desired date and time is within the scope of rights for the first agent, the changing means of the first agent may add the shared scheduled activity to the first schedule at the desired date and time, and when the addition of the shared scheduled activity to the first schedule at the desired date and time is outside the scope of rights for the first agent and the result of the asking from the first user indicates that it is acceptable to add the shared scheduled activity, the changing means of the first agent may add the shared scheduled activity to the first schedule at the desired date and time.

In the schedule management system, the first agent may further include another date and time information acquiring means that, when the addition of the shared scheduled activity to the first schedule at the desired date and time is outside the scope of rights for the first agent and the result of the asking from the first user does not indicate that it is acceptable to add the shared scheduled activity, acquires other date and time information indicating another desired date and time at which the shared scheduled activity is to be added to the first schedule and the second schedule; and a providing means that provides the second agent with other request information requesting that the second agent add the shared scheduled activity to the second schedule at the other desired date and time. The second agent may further include an acquiring means that acquires the other request information; a determining means that determines that the shared scheduled activity is to be added to the second schedule at the other desired date and time based on the other request information; an asking means that, when adding the shared scheduled activity to the second schedule at the other desired date and time is outside a predetermined scope of rights for the second agent, asks the second user whether it is acceptable to add the shared scheduled activity to the second schedule at the other desired date and time; and a changing means that, when adding the shared scheduled activity to the second schedule at the other desired date and time is within the scope of rights for the second agent, changes the second schedule by adding the shared scheduled activity to the second schedule at the other desired date and time and that, when adding the shared scheduled activity to the second schedule at the other desired date and time is outside the scope of rights for the second agent, if the result of the asking from the second user indicates that it is acceptable to add the shared scheduled activity, changes the second schedule by adding the shared scheduled activity to the second schedule at the other desired date and time.

In the schedule management system, the first agent may further include an audio analyzing means for analyzing audio of a user, the asking means of the first agent may ask the user by outputting audio, and the audio analyzing means of the first agent may acquire the result of the asking by analyzing audio of the user in response to the asking.

The summary clause does not necessarily describe all necessary features of the embodiments of the present invention. The present invention may also be a subcombination of the features described above.

### BRIEF DESCRIPTION OF THE DRAWINGS

Fig. 1 shows an overall configuration of a schedule management system according to an embodiment of the present invention.
Fig. 2 shows the function blocks of the server.
Fig. 3A shows an exemplary image including the agent image displayed in the display section.
Fig. 3B shows an exemplary image including the agent image displayed in the display section.
Fig. 4 is a flow chart showing the process performed by the agent for changing the schedule of an electric device according to the schedule of the user.
Fig. 5 is a flow chart showing the process performed when adding a scheduled activity shared by a plurality of users to the schedules of these users.
Fig. 6A is an exemplary operating screen used when the user adjusts the schedule.
Fig. 6B is an exemplary operating screen used when the user adjusts the schedule.
Fig. 6C is an exemplary operating screen used when the user adjusts the schedule.
Fig. 6D is an exemplary operating screen used when the user adjusts the schedule.
Fig. 6E is an exemplary operating screen used when the user adjusts the schedule.
Fig. 6F is an exemplary operating screen used when the user adjusts the schedule.
Fig. 7 is a flow chart of a process performed when an agent receives a request to add a shared scheduled event to the schedule of the user managed by this agent.
Fig. 8 shows an exemplary hardware configuration of the server.

### DESCRIPTION OF EXEMPLARY EMBODIMENTS

Hereinafter, some embodiments of the present invention will be described. The embodiments do not limit the invention according to the claims, and all the combinations of the features described in the embodiments are not necessarily essential to means provided by aspects of the invention.

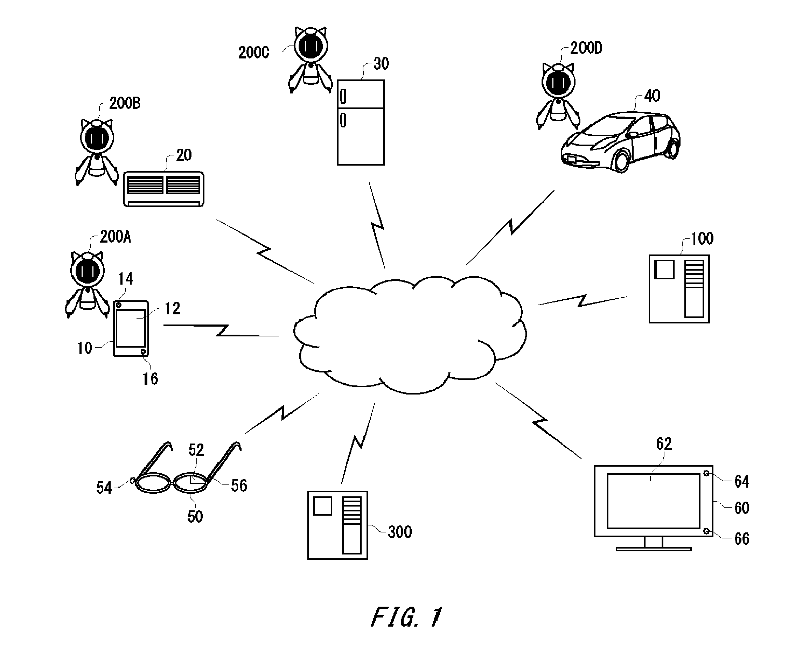

Fig. 1 shows an overall configuration of a schedule management system according to an embodiment of the present invention. The schedule management system according to the present embodiment includes a plurality of agents 200A, 200B, 200C, and 200D (referred to hereinafter collectively as the "agents 200"). The agents 200 manage a schedule that is a target for management. The agent 200A manages a schedule for activities of a user that involve portable devices 10, such as mobile phones, multifunctional mobile phones, and PDAs. The agent 200B manages a schedule for operation of an air conditioner 20. The agent 200C manages a schedule for operations of a refrigerator 30. The agent 200D manages a schedule for operation of an automobile 40, such as an electric automobile or a hybrid electric automobile. The air conditioner 20, the refrigerator 30, and the automobile 40 are examples of electric devices.

The schedule management system further includes a server 100 or a server 300. The server 100 is a local server connected to a local area network, such as a company or home network, for example. The server 300 is a web server connected to the internet, for example. The agents 200 are realized by executing a program installed on the server 100 or the server 300, for example.

The portable device 10 includes a display section 12, an image capturing section 14, and an audio input section 16. By accessing the server 100 or the server 300, the portable device 10 activates the agent 200A and displays an agent image showing the agent 200A on the display section 12, for example. The audio input section 16 acquires the audio of the user. The user converses with the agent 200A through audio, characters, or the like while viewing the agent image, in order to adjust the schedule of the user. If the display image that is captured by the image capturing section 14 and displayed in the display section 12 includes an electric device whose schedule is managed by an agent 200, the portable device 10 causes the display section 12 to display an image formed by combining the agent image showing the agent 200 corresponding with the management target electric device with the display image. The user converses with the agent 200 through audio, characters, or the like while viewing the agent image, in order to adjust the schedule of the electric device.

The eyewear 50 includes a transparent display section 52, an image capturing section 54, and an audio input section 56. The eyewear 50 houses a microcomputer. The microcomputer functions as a field of view determining section. The field of view determining section determines whether an electric device managed by an agent 200 is within the field of vision of the user, based on an image captured by the image capturing section 54, position information of the user wearing the eyewear 50 acquired through GPS or the like, or information of a tilt sensor or the like housed in the eyewear 50, for example. When the field of vision determining section determines that an electric device managed by an agent 200 is within the field of vision of the user, the transparent display section 52 displays the agent image showing this agent 200. The user converses with the agent 200 through audio, characters, or the like while viewing the agent image displayed in the transparent display section 52, to adjust the schedule of the electric device.

The display apparatus 60 includes a display section 62, an image capturing section 64, and an audio input section 66. The display section 62 displays an agent image showing the agent 200 managing the schedule of the user whose image is captured by the image capturing section 64, for example. The audio input section 66 acquires the audio of the user. The user converses with the agent 200 through audio, characters, or the like while viewing the agent image displayed in the display section 62, to adjust the schedule of the user. The display apparatus 60 displays in the display section 62 the agent image showing the agent 200 that manages the schedule of an electric device designated by the user. The user may converse with the agent 200 through audio, characters, or the like while viewing the agent image displayed in the display section 62, to adjust the schedule of the electric device.

The agent 200 managing the schedule of an electric device communicates with the agent 200 managing the schedule of the user associated with the electric device, and may adjust the schedule of the electric device according to the schedule of the user.

For example, the agent 200B managing the air conditioner 20 acquires schedule information indicating the schedule of the user from the agent 200A managing the schedule of the user using the air conditioner 20. The agent 200B references this schedule information of the user, and identifies the time at which the user will depart or return home. The agent 200B may adjust the schedule for the time at which the power source of the air conditioner 20 is turned ON or OFF, based on the identified time.

The agent 200D managing the automobile 40 may acquire the schedule information of the user from the agent 200A managing the schedule of the user using the automobile 40. The agent 200D references this user schedule information, and may identify the time at which the user goes outside. The agent 200D may adjust the schedule for the time at which a battery in the automobile 40 finishes charging, based on the identified time.

An agent 200 managing the schedule of the user A may communicate with an agent 200 managing the schedule of the user B, and both of these agents 200 may adjust a date and time for a scheduled activity shared by both the user A and the user B.

Here, there may be scheduled items among the scheduled activities of a user or the scheduled operations of an electric device that would cause problems if changed automatically by an agent 200. Therefore, the agents 200 each have rights enabling them to change scheduled activities of a user or scheduled operations of an electric device within a predetermined scope. If the content of a schedule change is outside of the predetermined rights of an agent 200, the agent 200A asks the user who is involved in the scheduled activity or manages the electric device if it is acceptable to change the schedule. The agent 200 may change the schedule based on the change content designated by the user or the change content, based on the result of the inquiry.

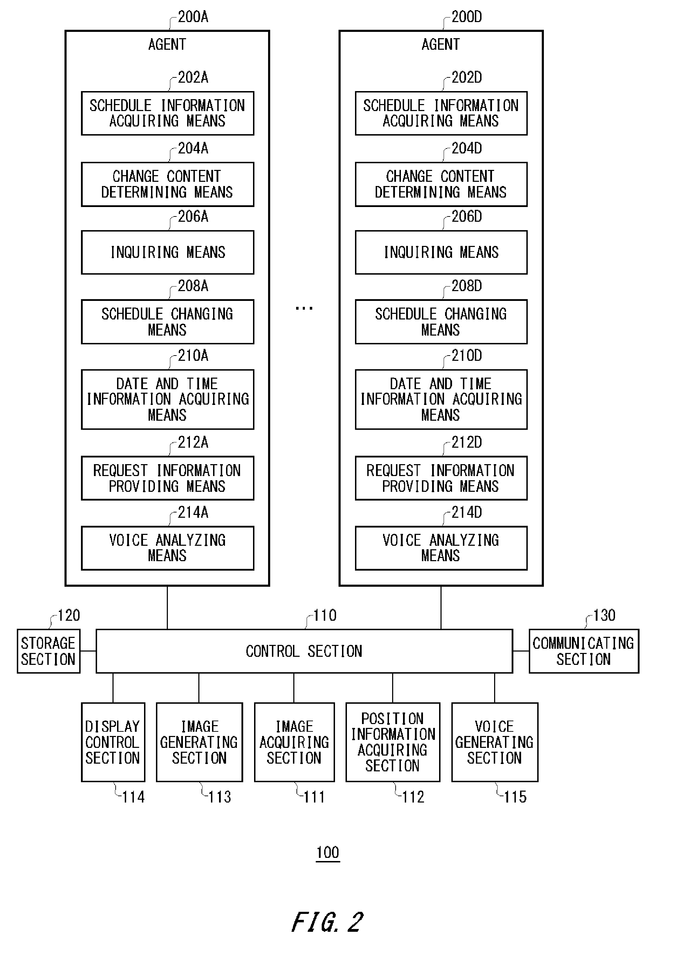

Fig. 2 shows the function blocks of the server 100. The server 300 has function blocks corresponding to the function blocks of the server 100 shown in Fig. 2.

The server 100 includes a plurality of agents 200, including the agent 200A and the agent 200D. The server 100 includes a control section 110, a display control section 114, an image generating section 113, an image acquiring section 111, a position information acquiring section 112, an audio generating section 115, a storage section 120, and a communicating section 130. The control section 110 controls every component of the server 100. The portable device 10, the eyewear 50, the display apparatus 60, and the electric devices possessed by the user may each include an agent 200.

The agent 200A manages the schedule A relating to a target A, such as scheduled activities of the user or scheduled operations of an electric device. The agent 200D manages a schedule D relating to a target D such as a scheduled activity of the user or a schedule operation of an electric device. The agent 200A includes a schedule information acquiring means 202A, a change content determining means 204A, an asking means 206A, a schedule changing means 208A, a date and time information acquiring means 210A, a request information providing means 212A, and an audio analyzing means 214A. The agent 200D includes a schedule information acquiring means 202D, a change content determining means 204D, an asking means 206D, a schedule changing means 208D, a date and time information acquiring means 210D, a request information providing means 212D, and an audio analyzing means 214D. These means included in each agent 200 may be the same, and therefore the following description uses the means in the agent 200A as representative means.

The schedule information acquiring means 202A acquires information relating to another schedule, e.g. the schedule D, from another agent, e.g. the agent 200D. The change content determining means 204A determines the content of the change of the schedule A, based on the information relating the other schedule. The change content determining means 204A may determine the content of the change of a schedule for the operation of the automobile 40, which is an example of one electric device, based on the information relating to a schedule for the operation of the air conditioner 20, which is an example of another electric device. The change content determining means 204 may determine the content change of a schedule for charging of the automobile based on the timing at which the power supply of the air conditioner is turned ON or OFF. The agent 200 managing the schedule of the automobile may change the schedule for the automobile such that the charging of the automobile is scheduled for a period other than when the air conditioner is operating. In this way, the increase in peak power consumption caused by simultaneously charging the automobile and running the air conditioner can be restricted.

The change content determining means 204A may determine the change content of a schedule indicating the ON/OFF sate of the power source of an electric device managed by the agent 200A based on information relating to a schedule for an activity of a user that is another target managed by another agent. For example, the change content determining means 204A may determine the change content of a schedule indicating when the power source of the air conditioner is turned ON or OFF in combination with the scheduled return or scheduled departure of the user.

The change content determining means 204A may determine, as the change content of a schedule A, based on request information indicating a request to add a scheduled item on a new day, the addition to the schedule A of a scheduled activity shared with another schedule on a desired date and time designated by a user who is the target of another schedule managed by another agent.

When the change content is outside the predetermined scope of rights for the agent 200A, the asking means 206A asks the user whether it is acceptable to change the schedule A based on the change content. When the change content of a scheduled operation of an electric device managed by the agent 200A is outside the predetermined scope of rights for the agent 200A, the asking means 206A may ask the user whether it is acceptable to change the schedule A based on the change content, before a predetermined amount of time prior to the time at which the operation based on the change content is to be performed. The asking means 206A may ask the user whether to charge the automobile, before a time that is a predetermined amount of time prior to the time at which charging must begin in order to finish charging the automobile by a time at which the user is scheduled to depart, for example.

If the addition to the schedule A of a shared scheduled activity on a desired date and time designated from another agent 200 is outside of the scope of rights for the agent 200A, the asking means 206A may ask the user whether it is acceptable to add this shared scheduled item to schedule A at the desired date and time. The asking means 206A may ask the user by outputting sound through speakers provided to the portable device 10, the eyewear 50, or the display apparatus 60 of the user.

If the change content is within the predetermined scope of rights for the agent 200A, the schedule changing means 208 changes the schedule A based on the change content. Furthermore, if the change content is outside the predetermined scope of rights for the agent 200A, the schedule changing means 208A may change the schedule A based on the change content or on change content designated by the user, based on the result of asking the user.

The date and time information acquiring means 210A acquires from the user A date and time information relating to a desired date and time for adding a scheduled activity shared by the user A and the user D to the schedule A and the schedule D, for example. The request information providing means 212A provides the agent 200D managing the schedule of the user D with request information that requests the addition of the shared scheduled activity to schedule D at the desired date and time. In this case, the schedule information acquiring means 202D of the agent D acquires the request information as the information relating to the schedule D. The change content determining means of the agent D determines that the shared scheduled activity is to be added to the schedule D at the desired date and time as the change content of the schedule D, based on the request information. If adding the shared scheduled activity to the schedule D at the desired date and time is outside the scope of rights for the agent D, the asking means 206D of the agent D asks the user D whether it is acceptable to add the shared scheduled activity to the schedule D at the desired date and time.

If adding the shared scheduled activity to the schedule D at the desired date and time is within the scope of rights for the agent D, the schedule changing means 208D of the agent D adds the shared scheduled activity to the schedule D at the desired date and time. Furthermore, if adding the shared scheduled activity to the schedule D at the desired date and time is outside the scope of rights for the agent D and if the result of the inquiry to the user D is that it is acceptable to add this activity, the schedule changing means of the agent D adds the shared scheduled activity to the schedule D at the desired date and time.

If adding the shared scheduled activity to the schedule D at the desired date and time is outside the scope of rights for the agent D and if the result of the inquiry to the user D does not indicate that it is acceptable to add this activity, the date and time information acquiring means of the agent D may acquire from a user B other date and time information indicating another desired date and time at which the shared scheduled activity can be added to the schedule A and the schedule D. The request information providing means of the agent D may then supply the agent 200A with other request information that requests for the agent 200A to add the shared scheduled activity to the schedule A at another desired date and time designated by the user D.

In this case, the schedule information acquiring means 202A of the agent 200A acquires the other request information from the agent D. The change content determining means 204A determines whether to add the shared scheduled activity to schedule A at the other desired date and time, based on the other request information. If adding the shared scheduled activity to the schedule A at the other desired date and time is outside the scope of rights for the agent 200A, the 206A asks the user A whether it is acceptable to add the shared scheduled activity to the schedule A at the other desired date and time. If adding the shared scheduled activity to the schedule A at the other desired date and time is within the scope of rights for the agent 200A, the schedule changing means 208A changes the schedule A by adding the shared scheduled activity to the schedule A at the other desired date and time. If adding the shared scheduled activity to the schedule A at the other desired date and time is outside the scope of rights for the agent 200A and if the result of the inquiry to the user A indicates that it is acceptable to add this activity, the schedule changing means 208A may change the schedule A by adding the shared scheduled activity to the schedule A at the other desired date and time.

The audio analyzing means 214A analyzes the audio of the user. The audio analyzing means 214A may acquire the result of the inquiry by analyzing the audio of the user in response to the inquiry to the user.

The image acquiring section 111 acquires an image in which the user or an electric device is captured. The image acquiring section 111 may acquire an image captured by an image capturing section 14, 54, or 64 included in the portable device 10, the eyewear 50, or the display apparatus 60, via the network.

The position information acquiring section 112 acquires user position information. The position information acquiring section 112 acquires, as the user position information, position information indicating a current position of the portable device 10 or the eyewear 50, for example. The portable device 10 or the eyewear 50 includes a position information acquiring section that acquires position information indicating the current position of the portable device 10 or eyewear 50 as measured based on carrier waves transmitted from a GPS satellite, for example. The position information acquired by the position information acquiring section of the portable device 10 or the eyewear 50 is provided to the server 100. In addition to geographical point information, the position information may include a direction (North, East, South, or West) in which the portable device 10 or the eyewear 50 is facing. The position information acquiring section 112 may acquire, as the position information indicating the current position, an image captured by the image capturing section 14 or 54 included in the portable device 10 or eyewear 50. The position information acquiring section 112 may identify the position information corresponding to the captured image by comparing the acquired captured image to images registered in association with position information in advance.

The image generating section 113 generates an image indicating the agent 200. When an electric device managed by an agent 200 is included in the captured image acquired by the image acquiring section 111, the image generating section 113 generates the agent image showing the agent 200 corresponding to the electric device included in the captured image. The image generating section 113 may generate the agent image showing an agent 200 associated with the position information acquired by the position information acquiring section 112.

The display control section 114 combines the agent image showing the agent 200 with the captured image including the electric device acquired by the image acquiring section 111, and may display the resulting image in the display section 12 of the portable device 10. The display control section 114 may display the agent image of the agent 200 corresponding to the current position of the eyewear 50 in the transparent display section 52 of the eyewear 50. The display control section 114 may display, in the display section 62 of the display apparatus 60, the agent image showing an agent 200 designated by the user. The display control section 114 may display, in the display section 62 of the display apparatus 60, the agent image showing the agent 200 that manages the schedule of the user included in the captured image. The audio generating section 115 generates audio when the air conditioner 206 makes an inquiry to the user using audio.

The storage section 120 holds the schedule information that indicates the schedule including the scheduled operations of electronic devices or the scheduled activities of the users managed by the agents 200. The storage section 120 may hold an image associated with the position information used in order to designate the current position of the portable device 10 or the eyewear 50. The schedule may include a timing at which the power supply of an electric device such as the air conditioner is turned ON or OFF, the timing at which the automobile is charged, a temperature setting for the refrigerator, or the like.

The storage section 120 may hold rights information indicating the rights to a schedule for the agents 200. The storage section 120 may hold the rights information indicating the rights for each of a plurality of predetermined types of information relating to the schedule, e.g. for each user or electric device, for each type of scheduled item, or for each time period. The storage section 120 may hold information relating to the agents associated with users managing electric devices or inquiry destinations such as e-mail addresses to use when making an inquiry to the user managing the electric device.

The communicating section 130 transmits to the portable device 10, the eyewear 50, or the display apparatus 60 the information relating the schedule, position information, images, sound information indicating the result of the inquiry to the user, or the like, via the network.

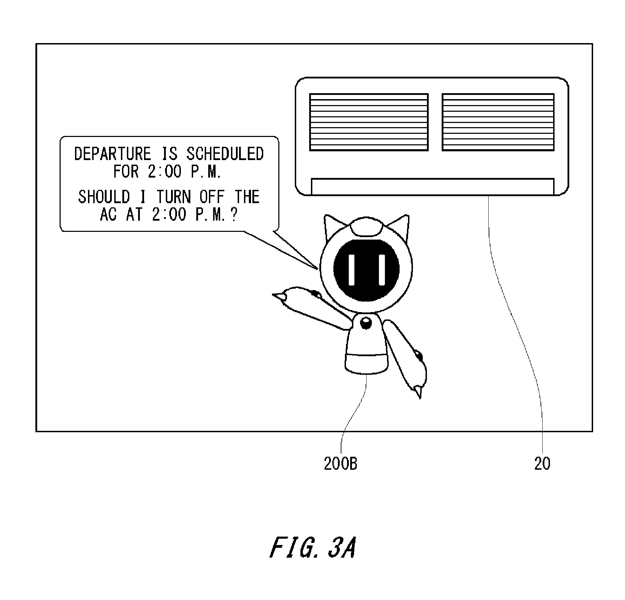

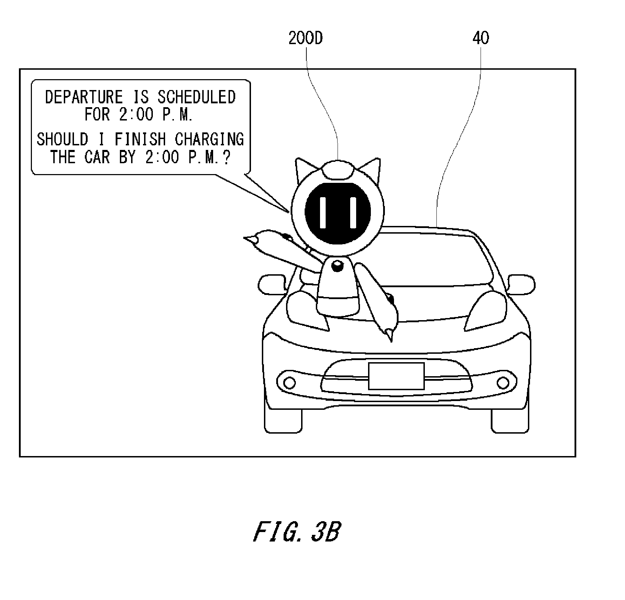

Figs. 3A and 3B each show an example of an image displayed in the display section 12 of the portable device 10, the display section 62 of the display apparatus 60, or the like. For example, the agent 200B managing the schedule for the air conditioner 20 acquires the information relating to the schedule of the user from the agent 200A corresponding to the user associated with the air conditioner 20. The agent 200B identifies that the user is departing at 2:00 p.m. If the user captures an image of the air conditioner 20 with the image capturing section 14 of their own portable device 10 and this image is displayed as a preview image in the display section 12, the agent image showing the agent 200B is displayed together with the preview image including the air conditioner 20. The agent 200B displays a message in the display section 12 suggesting that the power source of the air conditioner 20 be turned OFF at 2:00 p.m. The user receives this message and may respond to this proposal from the agent 200B by audio, for example. If permission is received from the user to turn OFF the power supply of the air conditioner 20 at 2:00 p.m., the agent 200B changes the schedule for turning the air conditioner 20 ON and OFF, such that the air conditioner 20 is turned OFF at 2:00 p.m.

The agent 200D managing the schedule of the automobile 40 acquires information relating to the schedule of the user from the agent 200A corresponding to the user associated with the automobile 40. The agent 200D identifies that the user is departing at 2:00 p.m. The agent 200D identifies a time at which charging must be begun, based on the time needed to finish charging the automobile 40 by 2:00 p.m. The agent image showing the agent 200D is displayed in the display section 62 of the display apparatus 60, the transparent display section 52 of the eyewear 50, or the like at the identified time or at a time that is a predetermined amount of time earlier than the identified time. The agent 200D displays, in the display section 62, the transparent display section 52, or the like, a message suggesting that the user finish charging the automobile by 2:00 p.m. The user receives this message and may respond to the suggestion from the agent 200D through audio, for example. If the user requests that the charging of the automobile 40 be completed, the agent 200 changes the scheduled charging of the automobile 40 such that the charging of the automobile 40 begins at the identified time.

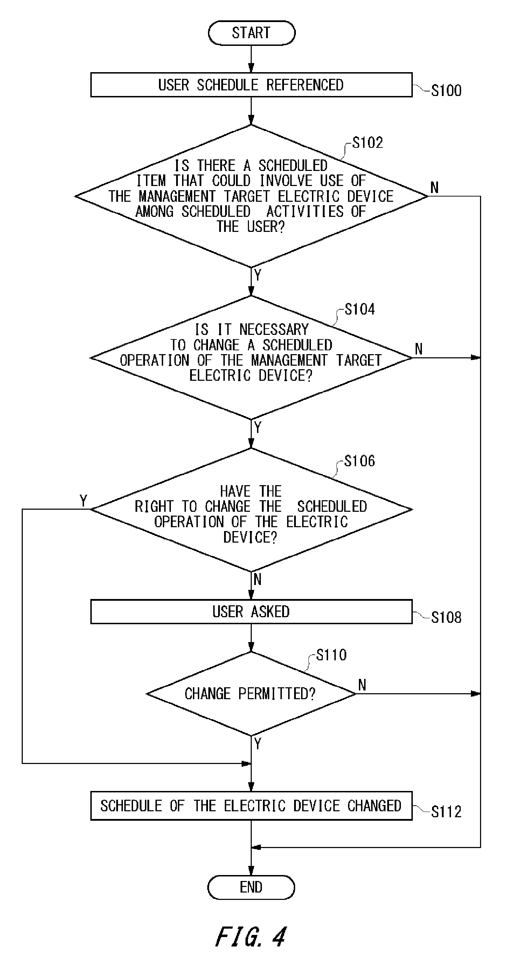

Fig. 4 is a flow chart showing a process by which the agent 200D managing the schedule D of an electric device D changes the schedule of the electric device according to the schedule A of the user managed by the agent 200A.

The schedule information acquiring means 202D of the agent 200D acquires the schedule information indicating the schedule A of the user, via the agent 200A, and references the schedule A of the user (S100). The change content determining means 204D of the agent 200D determines whether the scheduled activities of the user include a scheduled item that could involve using the electric device D that is the management target (S102). If the electric device D is the air conditioner, the agent 200D determines whether the user is scheduled to depart or return home. Furthermore, the agent 200D determines whether there is a scheduled item such as a meeting that is held in a location where the air conditioner is arranged. If the electric device D is an automobile such as an electric automobile, the agent 200D determines whether the user is scheduled to depart using the automobile. If the user is scheduled to depart, the agent 200D asks the user what transportation means is to be used, via the agent A, and may determine whether the user is scheduled to depart using the automobile based on the result of the inquiry.

If there is a scheduled item that could involve using the electric device D, the change content determining means 204D of the agent 200D determines whether it is necessary to change the scheduled operation of the electric device D, by referencing the schedule D (S104). The change content determining means 204D of the agent 200D determines whether the schedule D already indicates that the operation of turning OFF the power supply of the air conditioner is scheduled at the time at which the user departs, and determines whether the schedule D already indicates that the operation of finishing charging of the automobile by the time at which the user departs is already scheduled, for example. If a change is necessary, the change content determining means 204D of the agent 200D also determines the change content.

If it is necessary to change a scheduled operation of the electric device D, the schedule changing means 208D of the agent 200D determines whether the agent 200D has the right to change the scheduled operation of the electric device D based on the change content, based on the rights information held by the storage section 120 (S106). If the agent 200D has the rights, the schedule changing means 208D changes the schedule D of the electric device D based on the change content, without checking with the user managing the electric device D (S 112).

On the other hand, if the agent 200D does not have the right to change the schedule D based on the change content, the asking means 206D of the agent 200D asks the user managing the electric device D whether it is acceptable to change the schedule D based on the change content (S108).

The asking means 206D references the storage section 120 and identifies, as the inquiry destination, the agent associated with the user managing the electric device D, for example. Furthermore, the asking means 206D may reference the storage section 120 and identify, as the inquiry destination, contact information such as an e-mail address of the user managing the electric device D. The asking means 206D then makes an inquiry to the identified inquiry destination.

The schedule changing means 208D receives the result of the inquiry from the user, and determines whether the change based on the change content is permitted by the user (S110). If the change is permitted, the schedule changing means 208D changes the schedule D based on the change content (S112).

In this way, the agent 200 managing the schedule of an electric device changes the schedule of the electric device according to the schedule of the user associated with the electric device, e.g. the user using the electric device. As a result, power saving is realized for the electric device without disturbing the schedule of the user. Furthermore, the convenience for the user using the electric device is improved, without disturbing the schedule of the user. Yet further, if the agent does not have the right to change the schedule based on the change content, the agent 200A asks the user about the change. Accordingly, inconveniences to the user caused by the agent 200 making changes automatically can be prevented.

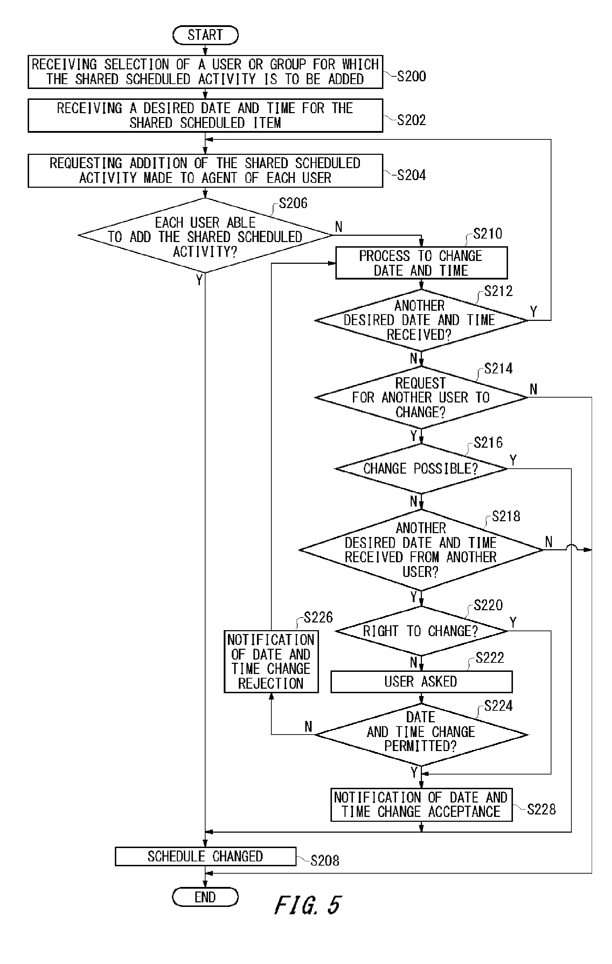

Fig. 5 is a flow chart showing the process performed when adding a scheduled activity shared by a plurality of users to the schedules of these users.

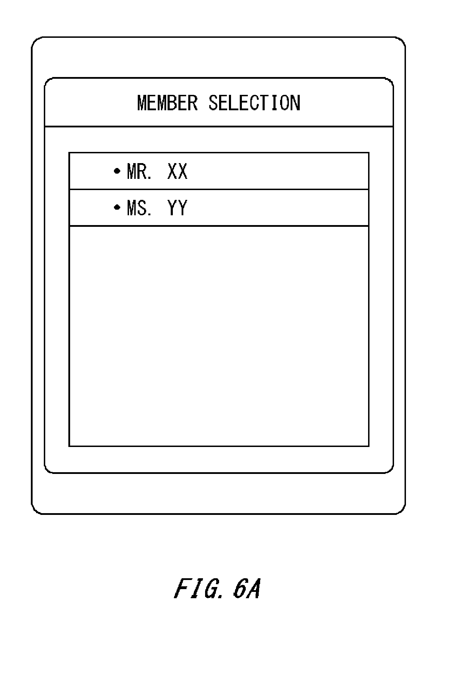

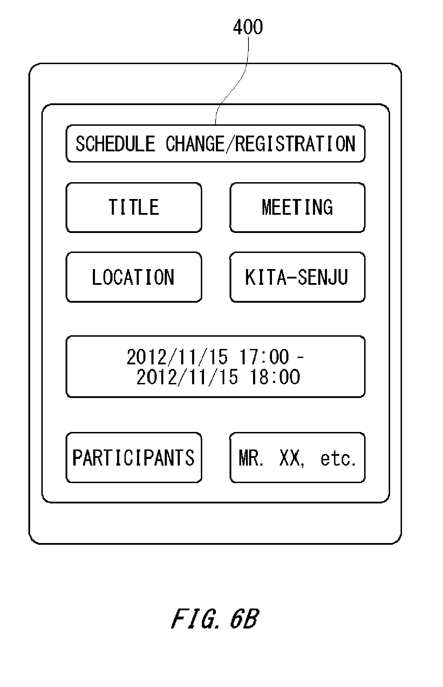

As an example, the agent 200A of the user A who wishes to add the shared scheduled activity receives from the user A a selection of another user or a group for which the shared scheduled activity is to be added (S200). The agent 200A displays an image, such as shown in Fig. 6A, in the display section 12 of the portable device 10 of the user A and receives a selection from the user A. Furthermore, the date and time information acquiring means 210A of the agent 200A receives a desired date and time at which the shared scheduled activity is to be added from the user A (S202). The agent 200A displays a screen such as shown in Fig. 6B, for example, in the display section 12 and receives the desired date and time from the user A. In addition to the date and time information, the agent 200A may receive a location and a title indicating the content of the scheduled activity, for example, from the user A.

Next, according to instructions from the user A, the request information providing means 212A of the agent 200A provides each agent managing the schedule of a selected user or a user registered in advance in the selected group with request information showing a request to add the shared scheduled activity. For example, the request information providing means 212A provides the request information to each agent in response to a "schedule adjustment/registration" button, such as shown on the screen in Fig. 6B, being clicked or touched by the user A.

The agent 200A receives a response result from each agent in response to the request information, and determines whether it is possible to add the shared scheduled activity at the designated desired date and time into the schedule of each user (S206). If it is possible to add the shared scheduled activity, the schedule changing means 208A of the agent 200A changes the schedule A by adding the shared scheduled activity at the designated desired date and time to the schedule A of the user A (S208).

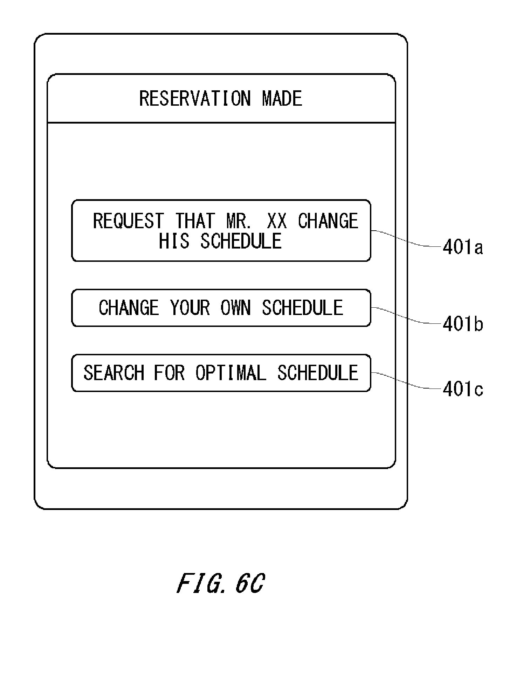

If it is not possible to add the shared scheduled activity, the agent 200A performs a date and time changing process. For example, the agent 200A displays a screen such as shown in Fig. 6C in the display section 12. The agent 200A may allow the user to select whether to request a change of the schedule for users who have overlapping scheduled items among the users who received the request to add the shared scheduled activity, whether to change the scheduled activity of the user A, or whether to search for a date and time that does not overlap with any existing scheduled activities in the schedules of the users that received the request.

If the user A chooses to change their own schedule, in response to the user A clicking or touching the "change your own schedule" button 401b in Fig. 6C, for example, the agent 200A may allow the user A to designate a new desired date and time. When the user A has designated the new desired date and time, the agent 200A may determine that another desired date and time has been received from the user A.

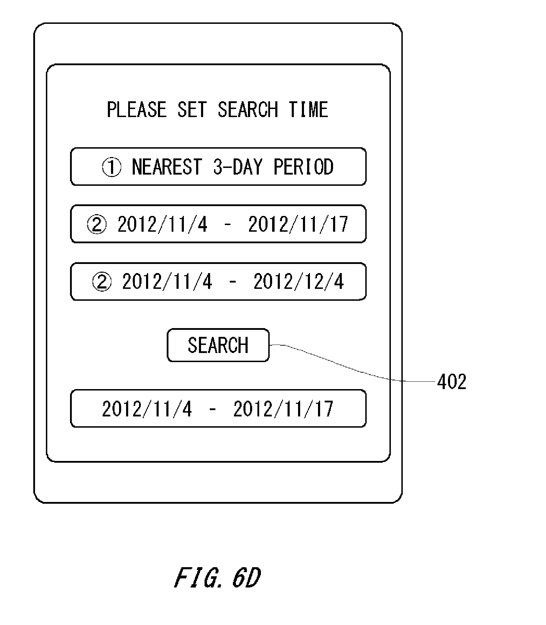

If the user A chooses to search for a date and time that does not overlap, in response to the user A clicking or touching the "search for optimal schedule" button 401c in Fig. 6C, for example, the agent 200A may search for a date and time that is open for each user, by referencing the schedule of each user. Here, the agent 200A may allow the user A to designate a range of dates and times to search. For example, the agent 200A may enable the user A to designate a range of dates and times to search by displaying in the display section 12 a screen enabling selection of a plurality of date and time ranges, such as shown in Fig. 6D. In response to the user A clicking or touching the search button 402, the agent 200A searches for a date and time that is open for each user within the date and time search range selected by the user A.

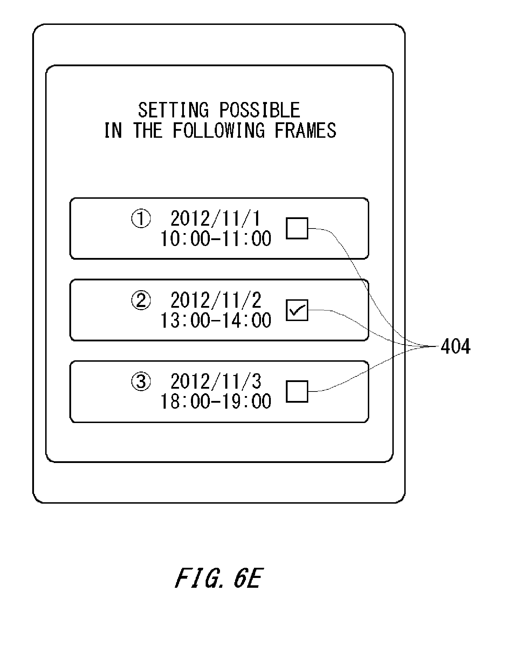

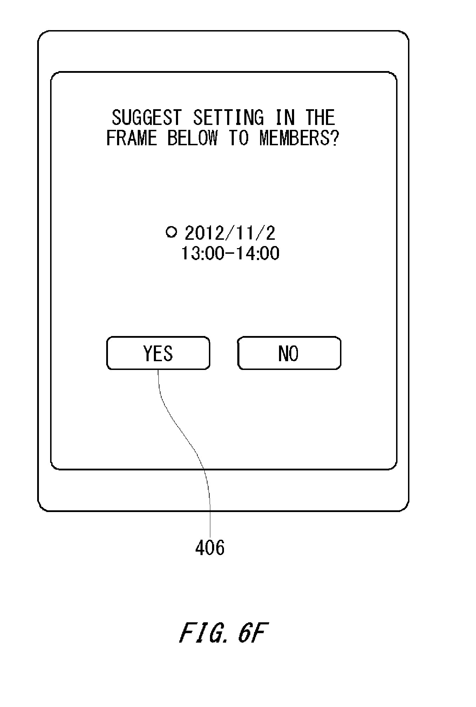

After searching for the date and time, the agent 200A may provide the user A with a plurality of candidate dates and times at which the shared scheduled activity can be added, such as shown in Fig. 6E. The agent 200A provides the user A with the date and time candidate corresponding to the radio button 404 selected by the user A from among the radio buttons 404 corresponding to the date and time candidates, in a screen such as shown in Fig. 6F, and may determine that another desired date and time has been received from the user A when the user A clicks or touches the "yes" button 406.

When another desired date and time is received from the user A (S212), the agent 200A again sends, to each agent of the users, a request to add the shared scheduled activity at the other desired date and time (S204).

On the other hand, if the user A selects to send a request for a change of schedule to each user who has received the request to add the shared scheduled activity and also has an overlapping scheduled item, when the user A clicks or touches the "request that Mr. XX change his schedule" button 401a shown in Fig. 6C, for example, it is determined that another user has received a request to change their schedule, and a request for a schedule change is sent to the agent of the other user designated by the user A.

When a request for another user to change their schedule is received (S214), the agent 200A determines whether permission for the change has been received from the agent of the other user (S216). If permission for the change has been received, the schedule changing means 208A of the agent 200A changes the schedule of the user A by adding the shared scheduled activity at the permitted desired date and time (S208).

On the other hand, if the schedule information acquiring means 202A of the agent 200A acquires information relating to the schedule of another user indicating another desired date and time designated by the other user from the agent of the other user who was asked to change their schedule, the agent 200A determines that another desired date and time has been received from another user (S218). In this case, the agent 200A determines whether the agent 200A has the right to change the schedule A of the user A in a manner to add the shared scheduled activity to the schedule of user A at the other desired date and time (S220).

If the agent 200A has this right, the schedule changing means 208A of the agent 200 notifies the other agent that the date and time change is permitted, to show the agent of the other user that the scheduled activity can be changed to the other desired date and time (S228), and changes the schedule A by adding the shared scheduled activity to the schedule A of the user A at the other desired date and time.

If the agent 200A does not have this right, the asking means 206A of the agent 200A asks the user A whether it is acceptable to add the shared scheduled item at the other desired date and time (S222). Next, the agent 200A determines whether the user A permits the change in date and time (S224). If the user A does not permit the change, the agent 200A notifies the other agent of a change of date and time rejection, which indicates that the change in date and time is not permitted (S226). If the agent 200A does not receive yet another desired date and time from the user A and does not receive any demands for further requests of change for other users, the process ends. If the user A permits the change, the schedule changing means 208A of the agent 200A notifies the other agents of a date and time change acceptance, which indicates to the agents of the other users that the shared scheduled activity can be changed to the other desired date and time (S228), and changes the schedule A by adding the shared scheduled activity to the schedule A of the user A at the other desired date and time (S208).

In the manner described above, when a shared scheduled activity is added to the schedule of each user, each agent, within the scope of their rights, communicates with the agents to automatically adjust the date and time of the shared scheduled activity to be an optimal date and time. Accordingly, a shared scheduled activity can be added automatically to each schedule. Furthermore, in the case of a schedule change that is outside the scope of rights of an agent, the agent asks the user whether the schedule can be changed, and therefore inconveniences to the user caused by scheduling changes can be avoided.

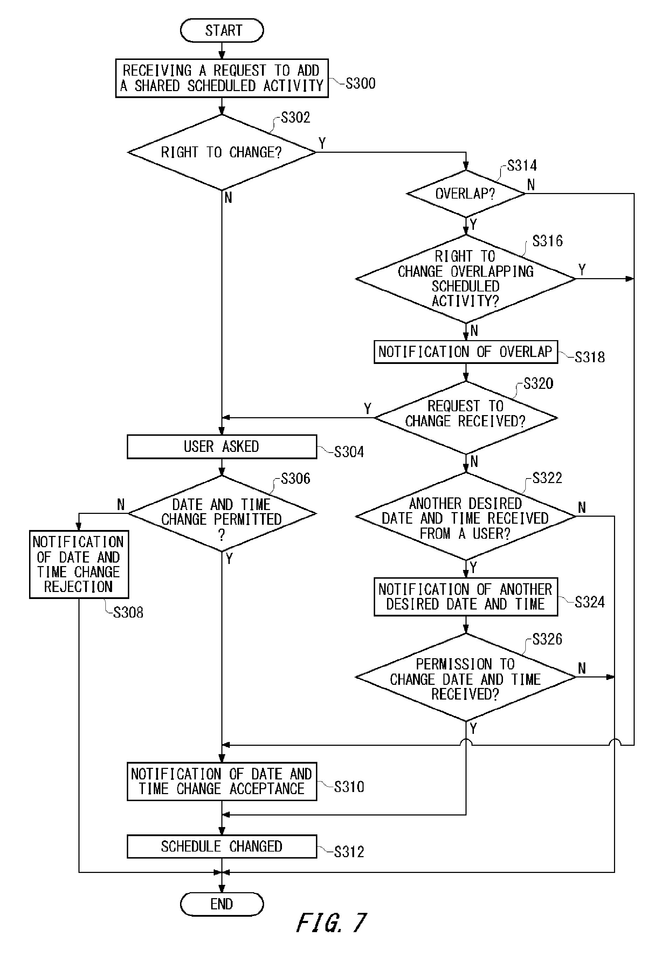

Fig. 7 is a flow chart of a process performed when an agent 200 receives a request to add a shared scheduled event to the schedule of the user managed by this agent 200.

For example, the schedule information acquiring means 202A of the agent 200A managing the schedule A of user A receives the request for addition by acquiring the request information indicating a request to add the shared scheduled activity at the designated desired date and time to the schedule A of the user A, from another agent (S300). The change content determining means 204A of the agent 200A determines the change content of the schedule A based on the request information. Furthermore, the schedule changing means 208A of the agent 200A determines whether the agent 200A has the right to make the change based on the change content (S302).

If the agent 200A does not have the right to make the change, the asking means 206A of the agent 200A asks the user A whether it is acceptable to add the shared scheduled activity to the schedule A at the designated desired date and time (S304). Next, the agent 200A determines whether the result of this inquiry indicates permission to change the date and time (S306). If the user A permits the change of date and time, the schedule changing means 208A provides the agent that made the request with a notification of date and time change permission, which indicates that the shared scheduled activity can be added at the designated desired date and time (S310), and changes the schedule A of the user A by adding the shared scheduled activity to the schedule A of the user A at the designated desired date and time (S312).

On the other hand, if the user A does not permit the date and time change, the agent 200A provides the agent that made the request with a notification of date and time change rejection, which indicates that the shared scheduled activity cannot be added at the designated desired date and time (S308).

If the agent 200A has the right to make the change, the schedule changing means 208A determines whether the schedule A of the user A includes another scheduled item at the designated desired date and time, i.e. whether there is an overlapping scheduled item (S314). If there is no overlapping scheduled item, the agent 200A provides the agent that made the request with a notification of date and time change permission (S310), and changes the schedule A of the user A by adding the shared scheduled activity to the schedule A of the user A at the designated desired date and time (S312).

If there is an overlapping scheduled item, the schedule changing means 208A determines whether the agent 200A has the right to change the overlapping scheduled item, i.e. whether the agent 200A has the right for an overlapping scheduled item change (S316). If the agent 200A has the right for an overlapping scheduled item change, the agent 200A provides the agent that made the request with a notification of date and time change permission (S310), and changes the schedule A of the user A by adding the shared scheduled activity to the schedule A of the user A at the designated desired date and time (S312).

If the agent 200A does not have the right for an overlapping scheduled item change, the schedule changing means 208A notifies the agent 200 that made the request that there is an overlapping scheduled item (S318). Next, when the request for a change of date and time is received from the agent that made the request, the asking means 206A asks the user A whether it is acceptable to add the shared scheduled activity to the schedule A at the desired date and time designated by the agent that made the request (S304).

If another desired date and time is received from the user A without receiving a request to change the date and time (S322), the agent that made the request is provided with notification of the other desired date and time from the user A (S324). Next, when permission to add the shared scheduled item to the other desired date and time indicated by the notification provided to the agent that made the request is received from the agent that made the request (S326), the schedule changing means 208A changes the schedule A of the user A by adding the shared scheduled activity to the schedule A of the user A at the other desired date and time designated by the user A (S312).

In the manner described above, each agent, within the scope of their rights, communicates with the agents to automatically adjust the date and time of the shared scheduled activity to be an optimal date and time. Accordingly, a shared scheduled activity can be added automatically to each schedule. Furthermore, in the case of a schedule change that is outside the scope of rights of an agent, the agent asks the user whether the schedule can be changed, and therefore inconveniences to the user caused by scheduling changes can be avoided.

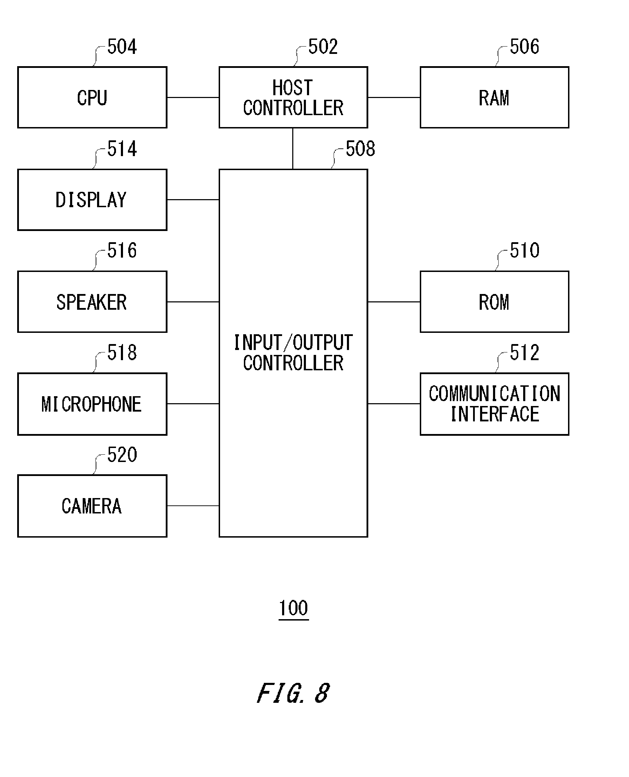

Fig. 8 shows an exemplary hardware configuration of the server 100. The server 100 includes a host controller 502, a CPU 504, a RAM 506, an input/output controller 508, a ROM 510, a communication interface 512, a display 514, a speaker 516, a microphone 518, and a camera 520, for example. The display 514, the speaker 516, the microphone 518, and the camera 520 may be connected to the server 100 via a network.

The host controller 502 connects the RAM 506 to the CPU 504, which accesses the RAM 506 with a high transfer rate. The CPU 504 operates based on a program stored in the RAM 506 and the ROM 510, to control each component. The input/output controller 508 connects the host controller 502 to the ROM 510, the communication interface 512, the display 514, the speaker 516, the microphone 518, and the camera 520.

The ROM 510 stores a program that is executed by the server 100 at startup, a program that depends on the hardware of the server 100, and the like.

The display 514 is an example of a display section. The speaker 516 is an example of an audio output section. The microphone 518 is an example of an audio input section. The camera 520 is an example of an image capturing section.

The program installed in the server 100 works together with the CPU 504 and the like to cause the server 100 to function as the schedule information acquiring means 202A and 202D, the change content determining means 204A and 204D, the asking means 206A and 206D, the schedule changing means 208A and 208D, the date and time information acquiring means 210A and 210D, the request information providing means 212A and 212D, the audio analyzing means 214A and 214D, the image acquiring section 111, the position information acquiring section 112, the image generating section 113, the display control section 114, and the audio generating section 115 shown in Fig. 2.

If the schedule of a user includes a meeting as a scheduled activity, the agent 200 may automatically create an agenda indicating a list of participants, a title for the meeting, a date and time for the meeting, and the like to be displayed for the scheduled activity. In this case, the agent 200 may identify the time of the meeting based on the schedule of the user, record audio during the meeting by using an audio recording function of the portable device 10 of the user, and register the created agenda in a database in association with the audio information.

While the embodiments of the present invention have been described, the technical scope of the invention is not limited to the above described embodiments. It is apparent to persons skilled in the art that various alterations and improvements can be added to the above-described embodiments. It is also apparent from the scope of the claims that the embodiments added with such alterations or improvements can be included in the technical scope of the invention.

The operations, procedures, steps, and stages of each process performed by an apparatus, system, program, and method shown in the claims, embodiments, or diagrams can be performed in any order as long as the order is not indicated by "prior to," "before," or the like and as long as the output from a previous process is not used in a later process. Even if the process flow is described using phrases such as "first" or "next" in the claims, embodiments, or diagrams, it does not necessarily mean that the process must be performed in this order.

## Claims

1. A schedule management system, comprising:
a first agent that manages a first schedule of a first target; and
a second agent that manages a second schedule of a second target, wherein
the first agent includes:
an acquiring means that acquires information relating to the second schedule from the second agent;
a determining means that determines change content of the first schedule based on the information relating to the second schedule;
an asking means that, when the change content is outside a predetermined scope of rights for the first agent, asks a user whether it is acceptable to change the first schedule based on the change content; and
a changing means that, when the change content is within the predetermined scope of rights for the first agent, changes the first schedule based on the change content and that, when the change content is outside the predetermined scope of rights for the first agent, changes the first schedule based on the change content or change content designated by the user, based on a result of asking the user.

2. The schedule management system according to Claim 1, wherein the second agent includes:
an acquiring means that acquires information relating to the first schedule from the first agent;
a determining means that determines change content of the second schedule based on the information relating to the first schedule;
an asking means that, when the change content is outside a predetermined scope of rights for the second agent, asks a user whether it is acceptable to change the second schedule based on the change content; and
a changing means that, when the change content is within the predetermined scope of rights for the second agent, changes the second schedule based on the change content and that, when the change content is outside the predetermined scope of rights for the second agent, changes the second schedule based on the change content or change content designated by the user, based on a result of asking the user.

3. The schedule management system according to Claim 1 or 2, wherein
the first schedule includes a schedule for scheduled operations of a first electric device, which is the first target,
the second schedule includes a schedule for scheduled activities of the user, who is the second target, and
the determining means of the first agent determines the change content of the schedule for the scheduled operations of the first electric device based on information relating to the schedule for scheduled activities of the user.

4. The schedule management system according to Claim 3, wherein
when the change content of the scheduled operations of the first electric device is outside the predetermined scope of rights for the first agent, the asking means of the first agent asks the user whether it is acceptable to change the first schedule based on the change content, at a time that is a predetermined amount of time before a time at which the scheduled operation based on the change content is to be performed.

5. The schedule management system according to Claim 3 or 4, wherein
the first schedule includes a timing at which a power supply of the first electric device is turned ON or OFF, and
the determining means of the first agent determines the change content of the schedule indicating the timing at which the power supply of the first electric device is turned ON or OFF, based on information relating to the schedule for scheduled activities of the user.

6. The schedule management system according to Claim 1 or 2, wherein
the first schedule includes a schedule for scheduled operations of a first electric device, which is the first target,
the second schedule includes a schedule for scheduled operations of a second electric device, which is the second target, and
the determining means of the first agent determines the change content of the schedule for the scheduled operations of the first electric device based on information relating to the schedule for scheduled operations of the second electric device.

7. The schedule management system according to Claim 6, wherein
the first schedule includes a schedule for scheduled charging of an automobile, which is the first electric device,
the second schedule includes a timing at which a power supply of the second electric device is turned ON or OFF, and
the determining means of the first agent determines the change content of the schedule for the scheduled charging of the automobile based on the timing at which a power supply of the second electric device is turned ON or OFF.

8. The schedule management system according to any one of Claims 3 to 7, further comprising:
an image acquiring section that acquires a captured image including the first electric device;
an image generating section that generates an image showing the first agent; and
a display control section that displays the image of the first electric device acquired by the image acquiring section in combination with the image showing the first agent.

9. The schedule management system according to any one of Claims 3 to 7, further comprising:
an image generating section that generates an image showing the first agent; and
a display control section that displays the image showing the first agent in a transparent display section provided in eyewear.

10. The schedule management system according to Claim 1 or 2, wherein
the first schedule includes a schedule for scheduled activities of a first user, who is the first target,
the second schedule includes a schedule for scheduled activities of a second user, who is the second target,
the second agent includes:
an acquiring means for acquiring date and time information relating to a desired date and time at which a shared scheduled activity that is shared by the first user and the second user is to be added to the first schedule and the second schedule; and
a providing means that provides the first agent with request information that requests addition of the shared scheduled activity to the first schedule at the desired date and time,
the acquiring means of the first agent acquires the request information as the information relating to the second schedule,
the determining means of the first agent determines that the shared scheduled activity is to be added to the first schedule at the desired date and time, as the change content of the first schedule, based on the request information,
when the addition of the shared scheduled activity to the first schedule at the desired date and time is outside the scope of rights for the first agent, the asking means of the first agent asks the first user whether it is acceptable to add the shared scheduled activity to the first schedule at the desired date and time, and
when the addition of the shared scheduled activity to the first schedule at the desired date and time is within the scope of rights for the first agent, the changing means of the first agent adds the shared scheduled activity to the first schedule at the desired date and time, and when the addition of the shared scheduled activity to the first schedule at the desired date and time is outside the scope of rights for the first agent and the result of the asking from the first user indicates that it is acceptable to add the shared scheduled activity, the changing means of the first agent adds the shared scheduled activity to the first schedule at the desired date and time.

11. The schedule management system according to Claim 10, wherein
the first agent further includes:
another date and time information acquiring means that, when the addition of the shared scheduled activity to the first schedule at the desired date and time is outside the scope of rights for the first agent and the result of the asking from the first user does not indicate that it is acceptable to add the shared scheduled activity, acquires other date and time information indicating another desired date and time at which the shared scheduled activity is to be added to the first schedule and the second schedule; and
a providing means that provides the second agent with other request information requesting that the second agent add the shared scheduled activity to the second schedule at the other desired date and time, and
the second agent further includes:
an acquiring means that acquires the other request information;
a determining means that determines that the shared scheduled activity is to be added to the second schedule at the other desired date and time based on the other request information;
an asking means that, when adding the shared scheduled activity to the second schedule at the other desired date and time is outside a predetermined scope of rights for the second agent, asks the second user whether it is acceptable to add the shared scheduled activity to the second schedule at the other desired date and time; and
a changing means that, when adding the shared scheduled activity to the second schedule at the other desired date and time is within the scope of rights for the second agent, changes the second schedule by adding the shared scheduled activity to the second schedule at the other desired date and time and that, when adding the shared scheduled activity to the second schedule at the other desired date and time is outside the scope of rights for the second agent, if the result of the asking from the second user indicates that it is acceptable to add the shared scheduled activity, changes the second schedule by adding the shared scheduled activity to the second schedule at the other desired date and time.

12. The schedule management system according to any one of Claims 1 to 11,
wherein
the first agent further includes an audio analyzing means for analyzing audio of a user,
the asking means of the first agent asks the user by outputting audio, and
the audio analyzing means of the first agent acquires the result of the asking by analyzing audio of the user in response to the asking.

13. A program causing a computer to function as a first agent that manages a first schedule of a first target, wherein the first agent comprises:
an acquiring means that acquires information relating to a second schedule, from a second agent managing the second schedule relating to a second target;
a determining means that determines change content of the first schedule based on the information relating to the second schedule;
an asking means that, when the change content is outside a predetermined scope of rights for the first agent, asks a user whether it is acceptable to change the first schedule based on the change content; and
a changing means that, when the change content is within the predetermined scope of rights for the first agent, changes the first schedule based on the change content and that, when the change content is outside the predetermined scope of rights for the first agent, changes the first schedule based on the change content or change content designated by the user, based on a result of asking the user.
